# EUROPÄISCHE PATENTSCHRIFT

(11) **EP 2 050 971 B1**
(45) Veröffentlichungstag und Bekanntmachung des Hinweises auf die Patenterteilung: **28.04.2010**
(21) Anmeldenummer: 07020169.4
(22) Anmeldetag: 15.10.2007
(51) Int. Cl.: F15B 13/08, F16L 15/00

(54) **Hydraulik-Baugruppe mit segmentiertem Zuganker**
Hydraulic component with segmented tie-rod
Composant hydraulique avec tirant segmenté

(43) Veröffentlichungstag der Anmeldung: 22.04.2009
(73) Patentinhaber: HAWE Hydraulik SE, 81673 München (DE)
(72) Erfinder: Neumair, Georg, 85402 Thalhausen (DE)
(74) Vertreter: Grünecker, Kinkeldey, Stockmair & Schwanhäusser Anwaltssozietät

(56) Entgegenhaltungen:
- WO-A-94/16252
- US-A- 3 509 904
- US-A- 4 934 411
- US-A- 5 951 064
- US-A1- 2003 056 840
- US-A1- 2004 228 679

## Beschreibung

Die Erfindung betrifft eine Hydraulik-Baugruppe gemäß Oberbegriff des Patentanspruchs 1.

Aus der Praxis und aus der Produktübersicht "HAWE Hydraulik", herausgegeben von der Firma Heilmeier & Weinlein Fabrik für Oelhydraulik GmbH & Co. KG, 81673 München, Druckdatum 06/97, Seite 57, ist es bekannt, Hydraulik-Baugruppen beispielsweise in Form eines Ventilverbandes in Reihenbauweise zu erstellen, indem die einzelnen Blockelemente (beispielsweise Ventilsegmentblöcke, Anschlussblöcke, Endplatten und dgl.) durch Zuganker miteinander verschraubt werden, derart, dass die Arbeitskanalabschnitte in den Blockelementen einen durchgehenden Arbeitskanal bilden und die Blockelemente mit ihren einander kontaktierenden Verbindungsflächen abgedichtet gegeneinander gespannt sind. Jeder Zuganker ist eine Spannschraube, die sich mit ihrem Kopf am ersten Blockelement abstützt, mit ihrem Schaft miteinander fluchtende Bohrungen in den Blockelementen durchsetzt, und am über das letzte Blockelement vorstehenden Schaftende eine Mutter trägt. Häufig sind zumindest zwei Spannschrauben und zwischen den Blockelementen Zentrierstifte vorgesehen. Um die Anzahl der Blockelemente nachträglich vergrößern zu können, kann die Spannschraube mit Überlänge ausgebildet sein, und die freibleibende Überlänge durch eine Distanzhülse ausgeglichen werden. Alternativ kann bei Änderung der Anzahl der Blockelemente auch ein Satz neuer kürzerer oder entsprechend längerer Spannschrauben verwendet werden. Die Arbeitskanalabschnitte sind getrennt von den Bohrungen für die Spannschrauben in den Blockelementen angeordnet. Bei einer Umgruppierung oder einem Umbau der Hydraulik-Baugruppe geht der Dichtschluss zwischen sämtlichen Blockelementen vorübergehend verloren, sobald die Spannmutter gelöst wird. Der Umbau ist zeitaufwendig und mühsam. Es gibt nun häufig Einsatzfälle, die relativ oft solche Umbauten der Hydraulik-Baugruppe erforderlich machen.

Aus US-A-4 934 411 ist ein Fluidsystem aus mehreren gegeneinander gespannten Gehäusen bekannt, wobei eine durchgehende Zugankerstruktur durch die Gehäuseserie aus einzelnen miteinander verschraubten Abschnitten gebildet wird. Die Abschnitte sind entweder zueinander passende Kopfschrauben mit einem Außengewinde am Schaftende und einem Innengewinde im Kopf, oder Schraubbolzen mit einem Innengewindeabschnitt im Schaft und einem Gewindebolzen als Verlängerung eines zwischen dem Gewindebolzen und dem Schaft angeordneten Kopfes, oder eine Hülse mit beidendigen Innengewinde-Blindbohrungen, oder eine Hülse mit einem Kopfende und einer durchgehenden Innengewindebohrung, an deren einem Ende ein Gewindebolzen eingeschraubt ist. Arbeitskanäle in den Gehäusen der Fluidbaugruppe sind getrennt von Bohrungen für die Zuganker vorgesehen.

Der Erfindung liegt die Aufgabe zugrunde, eine Hydraulik-Baugruppe anzugeben, an der ein Umbau zur Umgruppierung, zum Austausch, zur Wegnahme oder zum Hinzufügen von Blockelementen bequem und ohne Aufgabe des Dichtschlusses zwischen verbleibenden Blockelementen durchführbar ist, und in der die Blockelemente für das Unterbringen eines Zugankers und eines Arbeitskanals keine getrennten Bearbeitungsvorgänge erfordern.

Die gestellte Aufgabe wird mit den Merkmalen des Patentanspruchs 1 gelöst.

Da in der Hydraulik-Baugruppe der jeweilige Zuganker aus einer Serie einzeln miteinander verschraubter Hohlschrauben gebildet wird, die die Blockelemente einzeln gegeneinander spannen, braucht bei einem Umbau der Dichtschluss zwischen den verbleibenden Blockelementen nicht aufgegeben zu werden, und ist das Hinzufügen weiterer Blockelemente bequem, da jedes weitere Blockelement mit einer eigenen, dann zur Serie gehörenden Hohlschraube am nächstliegenden Blockelement angebracht wird. Für die Unterbringung des jeweiligen Zugankers und des Arbeitskanals sind in den Blockelementen keine getrennten Arbeitsvorgänge erforderlich, da die Serie der Hohlschrauben gleichzeitig den Arbeitskanal bildet. Dieses Konzept ist insbesondere für Hydraulik-Baugruppen zweckmäßig, die relativ häufig umgruppiert oder umgebaut werden müssen. Wenn in dem beispielsweise die Hydraulik-Baugruppe bildenden Ventilverband nur ein einziger Zuganker aus der Serie der Hohlschrauben verwendet wird, sind zweckmäßigerweise zwischen den Blockelementen Zentrierstifte vorgesehen, um die Ausrichtung der Blockelemente zueinander zu sichern. Es ist jedoch auch möglich, in der Hydraulik-Baugruppe zwei oder bei größeren Blockelementen sogar mehr als zwei Zuganker jeweils aus einer Serie von Hohlschrauben vorzusehen, beispielsweise auch um zwei oder mehr Arbeitskanäle zu definieren, wie einen Rücklaufkanal, einen Pumpenkanal, oder dgl.. Der Zuganker zeichnet sich dadurch aus, dass er z.B. mit Gleichteilen, beliebig verlängerbar und verkürzbar ist, ohne komplett ausgetauscht werden zu müssen, und dass er gleichzeitig den Arbeitskanal in der Hydraulik-Baugruppe formt. Automatisch ergeben sich ferner sehr hohe Spannkräfte, da die Hohlschrauben aufgrund des innenliegenden Arbeitskanals relativ große Gewindedurchmesser ermöglichen. Die hohen Haltekräfte sind vorteilhaft, um die Hydraulik-Baugruppe sehr stabil auszubilden und gut beherrschbare Dichtverhältnisse zwischen den Verbindungsflächen zu erreichen.

Im Sinne einer Gleichteilphilosophie sind zweckmäßig die Hohlschrauben untereinander gleich ausgebildet. Vorzugsweise basieren sie zumindest auf einem einzigen Grundtyp, der auf die in Reihenrichtung untereinander im Wesentlichen gleichen Abmessungen der Blockelemente abgestimmt ist, jedoch, falls erforderlich, einfach modifiziert werden kann. Die Hohlschrauben lassen sich somit in Großserienproduktion relativ kostengünstig herstellen.

Bei einer zweckmäßigen Ausführungsform ist jede Hohlschraube länger als die Blockelementbohrung, so dass sie in das benachbarte Blockelement eingreift. Zumindest eine innenliegende Schraubhandhabe, vorzugsweise ein Innensechskant, gestattet die bequeme Schraubverbindung der einzelnen Hohlschrauben, z.B., um entweder in die Hohlschraube des nächstfolgenden Blockelementes oder in ein Gewinde des nächstfolgenden Blockelementes eingeschraubt zu werden.

Zweckmäßig besitzt die Hohlschraube, mit gleichen Durchmessern, an einem Ende einen Innengewindeabschnitt und am anderen Ende einen Außengewindeabschnitt. Vorzugsweise kann zwischen diesen eine äußere, zum Außengewindeabschnitt weisende Anlageschulter vorgesehen sein. Die Hohlschrauben werden in der Reihenanordnung der Blockelemente ineinander verschraubt, wobei die erste Hohlschraube gegebenenfalls auch direkt in ein Blockelement eingeschraubt sein kann. Im der jeweiligen Anlageschulter erzeugt die Hohlschraube den notwendigen Anpressdruck, mit dem zwei benachbarte Blockelemente mit ihren Verbindungsflächen gegeneinandergespannt werden. Zweckmäßig schließt das jeweils großdurchmeßrige Ende einer Hohlschraube in ordnungsgemäß eingesetztem Zustand im Blockelement mit der Verbindungsfläche zumindest im Wesentlichen bündig dort ab, wo die Ringaufnahme für die Dichtung vorgesehen ist.

Um innerhalb eines Blockelementes eine Kommunikation zwischen dem in der Hohlschraube definierten Arbeitskanalabschnitt und im Blockelement vorgesehenen Strömungsweg und/oder Funktionskomponenten herstellen zu können, ist es zweckmäßig, wenn im Außenumfang der Hohlschraube zwischen der Anlageschulter und dem das Innengewinde enthaltenden Ende zumindest eine Einschnürung vorgesehen ist, die axial relativ lang sein kann, und dass vom Inneren der Hohlschraube zumindest ein Querkanal bis zur Einschnürung verläuft. Dank der axial relativ großen Länge der Einschnürung spielt es keine Rolle, wo im Blockelement ein Kanal zur die Hohlschraube enthaltenden Blockelementbohrung führt. Es ist auf jeden Fall sichergestellt, dass dann eine Kommunikation zwischen dem Arbeitskanalabschnitt und diesem Teil im Blockelement entsteht, wenn die Hohlschraube eingebaut ist.

Die Blockelementbohrung ist zweckmäßig eine Stufenbohrung, die in einem großdurchmeßrigen Anfangsteil wenigstens eine innenliegende Nut und um die Mündung eines kleindurchmeßrigen Endteils in einer Verbindungsfläche eine Ringaufnahme, jeweils für ein Dichtelement, aufweist. Mittels der Dichtelemente erfolgt die Abdichtung der Hohlschraube in der Blockelementbohrung und auch der Blockelementbohrung an der Verbindungsfläche gegenüber der Außenumgebung.

Bei einer zweckmäßigen Ausführungsform der Hydraulik-Baugruppe ist im Inneren zumindest einer Hohlschraube wenigstens ein hydraulisches Funktionselement platziert. Dieses Funktionselement könnte ein Rückschlagventil, ein Sieb, eine Blende, oder dgl. sein, das bereits in der Hohlschraube vormontiert werden kann, oder gegebenenfalls zu einem späteren Zeitpunkt in die Hohlschraube eingebracht wird, ohne dazu in das Blockelement eingreifen zu müssen.

Zweckmäßig wird zum Platzieren dieses hydraulischen Funktionselementes der Grundtyp der Hohlschraube im Inneren durch eine spanende Bearbeitung modifiziert, z.B. durch Ausfräsen oder Aufbohren, ohne die Außenabmessungen der Hohlschraube nachträglich noch zu verändern. Kleinere Funktionselemente lassen sich ohne Modifikation des Grundtyps einsetzen, z.B. in freibleibende Räume zwischen den Gewindeabschnitten, vorzugsweise unter Nutzen eines Gewindeabschnittes zum Festlegen des Funktionsteils.

Im Innengewindeabschnitt der Hohlschraube des letzten Blockelementes wird zweckmäßig ein Verschlussstopfen angeordnet, um den Arbeitskanal nach außen dicht abzuschließen. Alternativ könnte dieser Innengewindeabschnitt als Anschluss für beispielsweise eine Verrohrung oder ein Manometer benutzt werden. Ist die Hydraulik-Baugruppe beispielsweise durch Hinzufügen oder Wegnehmen von Blockelementen umzubauen, wird zunächst der Verschlussstopfen entfernt, ehe die weiteren Blockelemente angebaut oder welche weggenommen werden, und wird der Verschlussstopfen dann wieder in der Hohlschraube des letzten Blockelementes angebracht.

Beispielsweise hat die Hohlschraube für eine Nennweite des Arbeitskanals von 7,0 mm am den Innengewindeabschnitt enthaltenden Ende einen Außendurchmesser von etwa 18,5 mm. Dies kann einen Gewindedurchmesser von etwa 14 mm gestatten.

Ausführungsformen des Erfindungsgegenstandes werden anhand der Zeichnungen erläutert. Es zeigen:
- Fig. 1: eine Seitenansicht einer mit wenigstens einem Zuganker verschraubten Hydraulik-Baugruppe in Reihenanordnung,
- Fig. 2: einen Achsschnitt in der Achse des Zugankers in Fig. 1,
- Fig. 3: einen Achsschnitt einer zum Herstellen des Zugankers vorgesehenen Hohlschraube, und
- Fig. 4: einen Teil einer anderen Ausführungsform einer Hydraulik-Baugruppe in verschrauber Reihenanordnung.

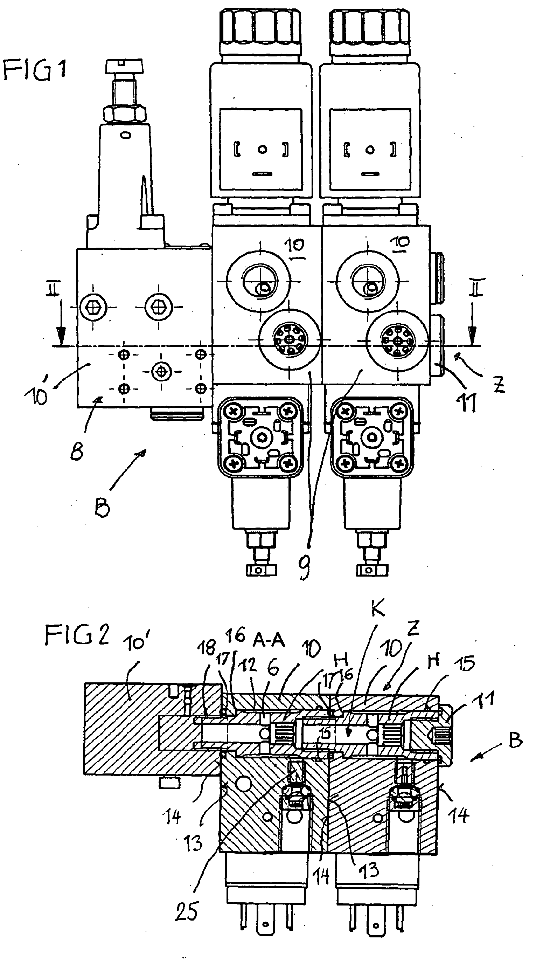

Eine Hydraulik-Baugruppe B in den Fig. 1 und 2 besteht aus zumindest zwei, in dieser Ausführungsform sogar drei, in Reihenanordnung über zumindest einen Zuganker Z verschraubten Blockelementen 10, 10'. Das Blockelement 10' ist beispielsweise eine sogenannte Endplatte mit der Funktion eines Druckbegrenzungsventils oder einer Drossel 8. Die Blockelemente 10 sind beispielsweise mit Wegeventilen mit Magnetbetätigung bestückt. Gemäß Fig. 2 sind die Blockelemente 10, 10' in Reihenanordnung und in der Reihenrichtung miteinander verschraubt, die der Achsrichtung des Zugankers Z entspricht. Der Zuganker Z besteht aus einer Serie von in dieser Ausführungsform zwei Hohlschrauben H, die einzeln ineinandergeschraubt sind, wobei die in Fig. 2 linke Hohlschraube H in einen Innengewindeabschnitt 18 des Blockelementes 10' direkt eingeschraubt ist. Die Hohlschraube H in Fig. 2 rechts, d.h. des letzten Blockelementes 10, ist durch einen eingeschraubten Verschlussstopfen 11 verschlossen, da die Serie der Hohlschrauben H einen durchgehenden Arbeitskanal K (beispielsweise einen Rücklaufkanal oder einen Pumpenkanal) für alle Blockelemente 10, 10' bildet. Der aus den Hohlschrauben H gebildete Zuganker Z spannt die Blockelemente 10, 10' mit ihren aneinander angrenzenden Verbindungsflächen 13, 14 gegebenenfalls über nicht gezeigte Dichtelemente gegeneinander.

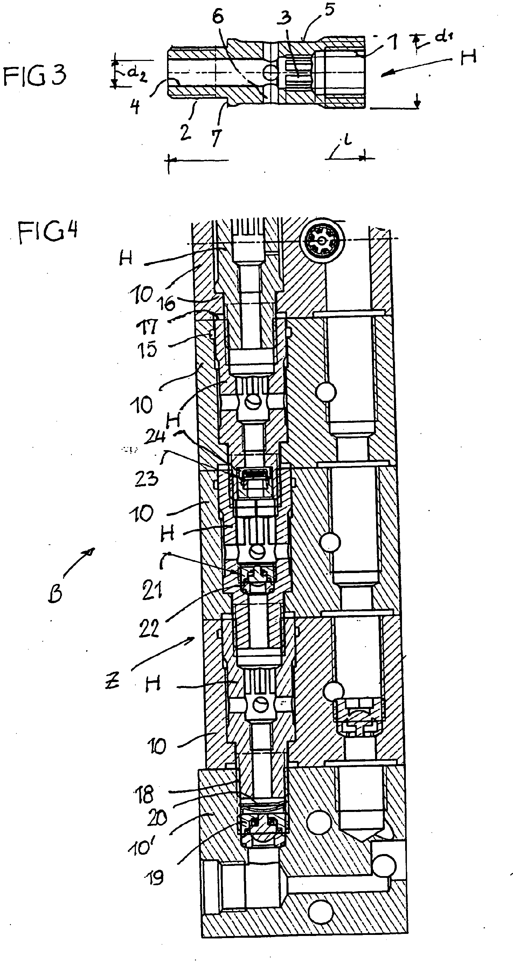

Ehe auf das Konzept der Erstellung der Hydraulik-Baugruppe B in Fig. 2 näher eingegangen wird, soll zunächst ein hier verwendeter Grundtyp der Hohlschraube H anhand Fig. 3 erläutert werden.

Die Hohlschraube H in Fig. 3 besteht beispielsweise aus Stahl und ist einer Oberflächenbehandlung unterworfen, z.B. einer Gasnitrierung. Die Hohlschraube H besitzt am großdurchmeßrigen Ende (Außendurchmesser d1) einen Innengewindeabschnitt 1 und am gegenüberliegenden Ende einen Außengewindeabschnitt 2, jeweils mit gleichen Gewindedurchmessern. Zwischen dem Innengewindeabschnitt 1 und dem den Außengewindeabschnitt 2 tragenden, einen Arbeitskanalabschnitt 4 mit einer Nennweite d2 enthaltenden Ende ist eine Schraubhandhabe 3, beispielsweise ein Innensechskant, eingeformt. Angrenzend an den Außengewindeabschnitt 2 ist außen eine Anlageschulter 7 geformt, an die sich in Richtung zum den Innengewindeabschnitt 1 enthaltenden Ende eine Einschnürung 5 im Außenumfang anschließt. Diese Einschnürung 5 steht über zumindest einen Querkanal 6 mit dem Inneren der Hohlschraube H in Verbindung.

Der Durchmesser d1 kann etwa 18,5 mm betragen, während die Nennwerte d2 etwa 7,0 mm beträgt, wobei die Gesamtlänge I der Hohlschraube H etwa 50 mm beträgt.

In Fig. 2 ist die linke Hohlschraube H mit ihrem Außengewindeabschnitt in den Innengewindeabschnitt 18 des Blockelementes 10' direkt eingeschraubt. Die Anlageschulter 7 steht an einer Gegenschulter 16 einer als Stufenbohrung ausgebildeten Blockelementbohrung 12 an und zieht die Verbindungsfläche 13 des linken Blockelementes 10 gegen die Verbindungsfläche 14 des Blockelementes 10'. Der Arbeitskanal K kommuniziert über die Querkanäle 6 mit einem weiteren, eine Funktionskomponente wie ein Ventil enthaltenden Querkanal 25 im in Fig. 2 linken Blockelement 10. In eine in der Blockelementbohrung 12 innen eingeformte Ringnut 15 ist ein Dichtelement eingelegt, das die Hohlschraube H nach rechts abdichtet. In eine in der Verbindungsfläche 13 die Mündung der Blockelementbohrung 10 umgebende Ringaufnahme 17 ist ein weiteres Dichtelement eingelegt, das die Hohlschraube H in der Verbindungsfuge nach außen abdichtet.

Das in Fig. 2 rechte Blockelement ist mittels der nächsten Hohlschraube H angeschlossen, deren Außengewindeabschnitt 2 in den Innengewindeabschnitt 1 der in Fig. 2 linken Hohlschraube eingeschraubt ist und über die Gegenschulter 16 die Verbindungsfläche 13 gegen die Verbindungsfläche 14 spannt. In den Innengewindeabschnitt 1 der in Fig. 2 rechten Hohlschraube H ist der Verschlussstopfen 11 eingeschraubt, der den Arbeitskanal K nach außen abdichtet.

Ist von der in Fig. 2 gezeigten Hydraulik-Baugruppe beispielsweise das rechte Blockelement 10 auszutauschen, dann wird die in Fig. 2 rechte Hohlschraube H nach vorherigem Entfernen des Verschlusstopfens 10 herausgeschraubt und mit dem neuen Blockelement wieder eingeschraubt. Sollen weitere Blockelemente angeschlossen werden, dann erfolgt dies in gleicher Weise mittels weiterer Hohlschrauben H. Dadurch wird automatisch auch der Arbeitskanal K entsprechend verlängert.

Fig. 4 verdeutlicht eine Hydraulik-Baugruppe B, die aus einer Vielzahl von Blockelementen 10 und einem Blockelement 10' als Endblock mittels mindestens eines Zugankers Z aus einer Serie einzeln miteinander verschraubter Hohlschrauben H erstellt ist, wobei die erste Hohlschraube H direkt in den Innengewindeabschnitt 18 des Blockelementes 10' eingeschraubt ist. Die Trennfugen zwischen den Verbindungsflächen werden jeweils durch Dichtelemente in den Ringaufnahmen 17, und die Hohlschrauben H durch Dichtelemente in den Innennuten 15 nach außen abgedichtet. In dem Blockelement 10 ist vor der Hohlschraube H ein Funktionselement 19, 20 (beispielsweise ein Rückschlagventil, ein Sieb oder Filter) eingebaut, und zwar unter Nutzen eines Teils des für die Hohlschraube H bestimmten Innenquerschnitts und Einbauraums.

Ferner sind in dieser Ausführungsform zumindest in zwei Hohlschrauben andere hydraulische Funktionskomponenten platziert, beispielsweise ein Rückschlagventil 21 in einer Aufbohrung 22 angrenzend an den Außengewindeabschnitt der Hohlschraube H, und ein Plättchenrückschlagventil oder eine Drossel 23 in einer Aufbohrung 24 innerhalb des Innengewindeabschnittes einer anderen Hohlschraube H.

Die verwendeten Hohlschrauben H sind untereinander gleich, oder basieren zumindest auf einem Grundtyp, der, beispielsweise, zum Platzieren von hydraulischen Funktionskomponenten innen durch spanende Bearbeitung (Drehen, Fräsen oder dgl.) modifiziert sein kann.

Bei größer dimensionierten Blockelementen 10 wäre es möglich, in ein- und derselben Blockelementbohrung 12 hintereinander mehr als nur eine Hohlschraube unterzubringen.

## Patentansprüche

1. Hydraulik-Baugruppe (B), die in Reihenanordnung in flächiger Anlage durch zumindest einen Zuganker (Z) aneinandergeschraubte Blockelemente (10, 10') aufweist, wobei in Reihenrichtung zumindest im Wesentlichen fluchtende Arbeitskanalabschnitte der Blockelemente über die jeweilige Trennfuge zwischen zwei Verbindungsflächen (13, 14) der Blockelemente (10', 10) hinweg einen Arbeitskanal (K) bilden, **dadurch gekennzeichnet, dass** der jeweilige Zuganker (Z) eine Serie einzeln miteinander verschraubter Hohlschrauben (H) ist, und dass pro Blockelement (10) in einer durchgängigen Blockelementbohrung (12) mindestens eine Hohlschraube (H) angeordnet ist, die innen einen Arbeitskanalabschnitt (4) aufweist.

2. Hydraulik-Baugruppe gemäß Anspruch 1, **dadurch gekennzeichnet, dass** die Hohlschrauben (H) untereinander gleich ausgebildet sind, vorzugsweise auf einem einzigen, auf die untereinander in Reihenrichtung zumindest im Wesentlichen gleichen Abmessungen der Blockelemente (10, 10') abgestimmten Grundtyp basieren.

3. Hydraulik-Baugruppe nach Anspruch 1, **dadurch gekennzeichnet, dass** die Hohlschraube (H) länger ist als die Blockelementbohrung (12), und zumindest eine innenliegende Schraubhandhabe (3) enthält, vorzugsweise einen Innensechskant.

4. Hydraulik-Baugruppe gemäß Anspruch 1, **dadurch gekennzeichnet, dass** die Hohlschraube (H) mit gleichen Durchmessern an einem Ende einen Innengewindeabschnitt (1) und am anderen Ende einen Außengewindeabschnitt (2) und, vorzugsweise, zwischen diesen eine äußere, zum Außengewindeabschnitt (2) weisende Anlageschulter (7) aufweist.

5. Hydraulik-Baugruppe gemäß wenigstens einem der vorhergehenden Ansprüche, **dadurch gekennzeichnet, dass** die Hohlschraube (H) im Außenumfang zwischen der Anlageschulter (7) und dem den Innengewindeabschnitt (1) enthaltenden Ende zumindest eine Einschnürung (5) aufweist, und dass vom Arbeitskanalabschnitt (4) im Inneren der Hohlschraube zumindest ein Querkanal (6) bis zur Einschnürung (5) verläuft.

6. Hydraulik-Baugruppe gemäß Anspruch 1, **dadurch gekennzeichnet, dass** die Blockelementbohrung (12) eine Stufenbohrung ist, die in einem großdurchmeßrigen Anfangsteil wenigstens eine innenliegende Nut (15) und um die Mündung eines kleindurchmeßrigen Endteils in einer Verbindungsfläche (13) zumindest eine Ringaufnahme (17), jeweils für ein Dichtelement aufweist.

7. Hydraulik-Baugruppe gemäß wenigstens einem der vorhergehenden Ansprüche, **dadurch gekennzeichnet, dass** im Inneren der Hohlschraube (H) wenigstens ein hydraulisches Funktionselement (21, 23), wie ein Rückschlagventil, ein Sieb, eine Blende, oder dgl. platziert ist.

8. Hydraulik-Baugruppe gemäß Anspruch 7, **dadurch gekennzeichnet, dass** zum Platzieren des Funktionselementes (21, 23) der Grundtyp der Hohlschraube (H) im Inneren durch eine spanende Bearbeitung bereichsweise (22, 24) modifiziert ist.

9. Hydraulik-Baugruppe gemäß Anspruch 1, **dadurch gekennzeichnet, dass** im Innengewindeabschnitt (1) der Hohlschraube (H) des letzten Blockelementes (10) ein Verschlussstopfen (11) angeordnet ist.

10. Hydraulik-Baugruppe gemäß wenigstens einem der vorhergehenden Ansprüche, **dadurch gekennzeichnet, dass** die Hohlschraube (H) aus Stahl besteht und zumindest teilweise oberflächenbehandelt, z.B. gasnitriert, ist.

11. Hydraulik-Baugruppe gemäß wenigstens einem der vorhergehenden Ansprüche, **dadurch gekennzeichnet, dass** für eine Nennweite (d2) des Arbeitskanals (K) von 7,0 mm der den Innengewindeabschnitt (1) enthaltene Endteil der Hohlschraube einen Außendurchmesser von etwa 18,5 mm hat.

## Claims

1. Hydraulic subassembly (B) which has block elements (10, 10') screwed to one another in a row arrangement by means of at least one tie rod (Z) so as to be in bearing contact over their area, working-duct portions, at least essentially aligned in the row direction, of the block elements forming a working duct (K) over and beyond the respective parting plane between two connecting surfaces (13, 14) of the block elements (10', 10), **characterized in that** the respective tie rod (Z) is a series of hollow screws (H) screwed individually to one another, and **in that**, for each block element (10), at least one hollow screw (H), which has internally a working-duct portion (4), is arranged in a continuous block-element bore (12).

2. Hydraulic subassembly according to Claim 1,
**characterized in that** the hollow screws (H) are designed identically to one another, preferably are based on a single fundamental type coordinated with the dimensions of the block elements (10, 10'), which dimensions are at least essentially identical to one another in the row direction.

3. Hydraulic subassembly according to Claim 1,
**characterized in that** the hollow screw (H) is longer than the block-element bore (12) and contains at least one internal screw handle (3), preferably a hexagon socket.

4. Hydraulic subassembly according to Claim 1,
**characterized in that** the hollow screw (H) with identical diameters has, at one end, an internally threaded portion (1) and, at the other end, an externally threaded portion (2) and preferably, between these, has an outer bearing shoulder (7) pointing towards the externally threaded portion (2).

5. Hydraulic subassembly according to at least one of the preceding claims, **characterized in that** the hollow screw (H) has at least one contraction (5) in the outer circumference between the bearing shoulder (7) and the end containing the internally threaded portion (1), and **in that** at least one transverse duct (6) runs from the working-duct portion (4), inside the hollow screw, as far as the contraction (5).

6. Hydraulic subassembly according to Claim 1,
**characterized in that** the block-element bore (12) is a stepped bore which has, in an initial part of large diameter, at least one internal groove (15) and, around the issue of an end part of a small diameter, in a connection surface (13), at least one annular receptacle (17), in each case for a sealing element.

7. Hydraulic subassembly according to at least one of the preceding claims, **characterized in that** at least one hydraulic functional element (21, 23), such as a non-return valve, a sieve, a diaphragm or the like, is placed inside the hollow screw (H).

8. Hydraulic subassembly according to Claim 7,
**characterized in that**, for the placement of the functional element (21, 23), the fundamental type of the hollow screw (H) is modified inside, in regions (22, 24), by means of a cutting machining.

9. Hydraulic subassembly according to Claim 1,
**characterized in that** a closing plug (11) is arranged in the internally threaded portion (1) of the hollow screw (H) of the last block element (10).

10. Hydraulic subassembly according to at least one of the preceding claims, **characterized in that** the hollow screw (H) consists of steel and is at least partially surface-treated, for example gas-nitrided.

11. Hydraulic subassembly according to at least one of the preceding claims, **characterized in that**, for a nominal width (d2) of the working duct (K) of 7.0 mm, that end part of the hollow screw which contains the internally threaded portion (1) has an outside diameter of about 18.5 mm.

## Revendications

1. Composant hydraulique (B), qui présente des éléments de bloc (10, 10') vissés les uns contre les autres en rangée, en appui plan, par au moins un tirant (Z), des sections de canal de travail des éléments de bloc, au moins essentiellement alignées dans la direction de la rangée, formant un canal de travail (K) par-dessus le joint respectif entre deux surfaces d'assemblage (13, 14) des éléments de bloc (10, 10'), **caractérisé en ce que** le tirant respectif (Z) est une série de boulons creux à filet femelle (H) vissés individuellement entre eux, et qu'au moins un boulon creux à filet femelle (H) est disposé par élément de bloc (10) dans un alésage d'élément de bloc continu (12), lequel boulon présente intérieurement une section de canal de travail (4).

2. Composant hydraulique suivant la revendication 1,
**caractérisé en ce que** les boulons creux à filet femelle (H) ont une réalisation mutuelle égale, sont de préférence basés sur un type de base unique adapté aux dimensions des éléments de bloc (10, 10'), au moins essentiellement égales entre elles dans la direction de la rangée.

3. Composant hydraulique suivant la revendication 1,
**caractérisé en ce que** le boulon creux à filet femelle (H) est plus long que l'alésage d'élément de bloc (12), et comporte au moins une prise filetée intérieure (3), de préférence un six pans creux.

4. Composant hydraulique suivant la revendication 1,
**caractérisé en ce que** le boulon creux à filet femelle (H) présente avec des diamètres égaux une section taraudée (1) à une extrémité et une section filetée (2) à l'autre extrémité et, de préférence, un épaulement d'appui (7) extérieur entre ces dernières, orienté en direction de la section filetée (2).

5. Composant hydraulique suivant l'une au moins des revendications précédentes, **caractérisé en ce que** le boulon creux à filet femelle (H) présente dans le pourtour extérieur au moins un rétrécissement (5) entre l'épaulement d'appui (7) et l'extrémité comportant la section taraudée (1), et qu'au moins un canal transversal (6) s'étend de la section de canal de travail (4) à l'intérieur du boulon creux à filet femelle jusqu'au rétrécissement (5).

6. Composant hydraulique suivant la revendication 1, **caractérisé en ce que** l'alésage d'élément de bloc (12) est un alésage étagé, qui présente au moins une gorge intérieure (15) dans une partie initiale de grand diamètre et au moins un logement annulaire (17), respectivement pour un élément d'étanchéité, dans une surface d'assemblage (13) autour du débouché d'une partie d'extrémité de petit diamètre.

7. Composant hydraulique suivant l'une au moins des revendications précédentes, **caractérisé en ce qu'**au moins un élément fonctionnel hydraulique (21, 23), tel qu'une soupape anti-retour, un crible, un obturateur, ou analogues, est placé à l'intérieur du boulon creux à filet femelle (H).

8. Composant hydraulique suivant la revendication 7,
**caractérisé en ce que**, pour la mise en place de l'élément fonctionnel (21, 23), le type de base du boulon creux à filet femelle (H) est modifié intérieurement par zones (22, 24) par un usinage.

9. Composant hydraulique suivant la revendication 1, **caractérisé en ce qu'**un bouchon de fermeture (11) est disposé dans la section taraudée (1) du boulon creux à filet femelle (H) du dernier élément de bloc (10).

10. Composant hydraulique suivant l'une au moins des revendications précédentes, **caractérisé en ce que** le boulon creux à filet femelle (H) se compose d'acier et est soumis à un traitement de surface au moins partiel, par exemple nitruré en phase gazeuse.

11. Composant hydraulique suivant l'une au moins des revendications précédentes, **caractérisé en ce que**, pour un diamètre nominal (d2) du canal de travail (K) de 7,0 mm, la partie extrême du boulon creux à filet femelle, comportant la section taraudée (1), a un diamètre extérieur d'environ 18,5 mm.
